# EUROPEAN PATENT SPECIFICATION

(11) **EP 3 363 701 B1**
(45) Date of publication and mention of the grant of the patent: **07.08.2019**
(21) Application number: 18157150.6
(22) Date of filing: 16.02.2018
(51) Int. Cl.: B60T 8/36, B60T 17/04, B60T 8/32, B60T 8/17, B60T 13/68

(54) **BRAKE FLUID PRESSURE CONTROL DEVICE FOR VEHICLE AND METHOD OF MANUFACTURING BRAKE FLUID PRESSURE CONTROL DEVICE FOR VEHICLE**
BREMSFLÜSSIGKEITSDRUCKSTEUERUNGSVORRICHTUNG FÜR EIN FAHRZEUG UND VERFAHREN ZUR HERSTELLUNG EINER BREMSFLÜSSIGKEITSDRUCKSTEUERUNGSVORRICHTUNG FÜR EIN FAHRZEUG
DISPOSITIF DE COMMANDE DE PRESSION DE FLUIDE DE FREIN POUR VÉHICULE ET PROCÉDÉ DE FABRICATION D'UN DISPOSITIF DE COMMANDE DE PRESSION DE FLUIDE DE FREIN POUR VÉHICULE

(30) Priority: 17.02.2017 JP 2017028507
(43) Date of publication of application: 22.08.2018
(73) Proprietor: NISSIN KOGYO CO., LTD., Nagano, 389-0514 (JP)
(72) Inventor: Kodama, Takuro, Nagano, 389-0514 (JP)
(74) Representative: Hoffmann Eitle

(56) References cited:
- EP-A1- 2 868 958
- JP-A- 2011 006 033
- JP-A- 2011 025 777
- JP-A- 2011 046 247
- JP-A- 2014 069 670
- US-A1- 2013 330 181

## Description

### TECHNICAL FIELD

The present invention relates to a brake fluid pressure control device for a vehicle and a method of manufacturing a brake fluid pressure control device for a vehicle.

### BACKGROUND ART

As a pipe connection structure of a brake device, for example, there is a technology disclosed in JP-UM-H02-110792.

In the technology disclosed in JP-UM-H02-110792, a fitting hole is formed in a mounting body, and a protruding pin of a brake line is fit into the fitting hole, whereby turning is stopped.

In the technology disclosed in JP-UM-H02-110792, for example, in the case where it is required to connect a plurality of brake lines to the mounting body, since it is necessary to form as many fitting holes as the brake lines, man-hours for processing are increased.

JP-A-2011-25777 discloses a brake fluid pressure control device for a vehicle according to the preamble of claim 1.

From US-A1-2013/0330181, a method of manufacturing a brake fluid pressure control device for a vehicle according to the preamble of claim 6 is known.

However, it is demanded to reduce the manufacturing cost of a brake fluid pressure control device for a vehicle, and it is desired to reduce man-hours for processing even in the case of devising a solution to stop turning of a plurality of brake lines.

### SUMMARY

An object of the present invention is to provide a brake fluid pressure control device for a vehicle and a method of manufacturing the brake fluid pressure control device, which includes a structure configured to be able to reduce man-hours for processing even in the case of devising a solution to stop turning of a plurality of brake lines.

The invention relating to a first aspect is a brake fluid pressure control device for a vehicle, which includes a base including a brake fluid passage formed therein, the brake fluid pressure control device. In one face of the base, a plurality of insertion holes in which a plurality of brake lines are to be inserted are formed, and a recess for stopping turning of the plurality of brake lines is formed, and protruding parts of the plurality of brake lines are inserted into the recess.

The invention relating to a second aspect is the brake fluid pressure control device according to the first aspect, wherein an opening of the recess is formed in a substantially triangular shape.

The invention relating to a third aspect is the brake fluid pressure control device according to the first aspect or the second aspect, wherein the recess is formed at a position surrounded by the plurality of insertion holes.

The invention relating to a fourth aspect is the brake fluid pressure control device according to any one of the first aspect to the third aspect, wherein in the one face of the base, a hole is formed to be connected to the brake fluid passage, and the hole is formed so as to be included in the recess.

The invention relating to a fifth aspect is the brake fluid pressure control device according to any one of the first aspect to the fourth aspect, wherein the recess is formed in a shape having a U-shaped cross section having flat inner circumferential surfaces.

The invention relating to a sixth aspect is a method of manufacturing a brake fluid pressure control device for a vehicle, which includes a base including a brake fluid passage formed therein. The method comprises:
a step of forming a recess in one face of a base;
a step of processing the base while clamping the base using the recess; and
a step of inserting leading end parts of a plurality of brake lines into the recess.

According to the first aspect of the invention, it is possible to stop turning due to the common recess into which the leading end parts of the plurality of brake lines are inserted. As compared to the case of forming as many recesses as the brake lines, according to the present invention, it is possible to reduce the number of recesses, and as a result, it is possible to minimize man-hours for processing required to stop turning of the plurality of brake lines.

According to the second aspect of the invention, since the recess is formed in the substantially triangular shape, as compared to the case where the recess is a circular hole or an elongated hole, it is possible to easily insert the leading end parts of the plurality of brake lines into the recess, and it is possible to reduce man-hours for assembling.

According to the third aspect of the invention, it is possible to achieve space saving, and it is possible to reduce the size of the brake fluid pressure control device for a vehicle.

According to the fourth aspect of the invention, since the hole is formed in the recess so as to be included in the recess, the hole doubles as a part of the recess, and thus it is possible to reduce the processing cost.

According to the fifth aspect of the invention, since the recess is formed in the shape having the U-shaped cross section having the flat inner circumferential surfaces, it is possible to use the recess as a clamp hole, and the need for separately providing a recess for stopping turning of banjo fittings and a clamp hole is eliminated, and thus it is possible to reduce the processing cost.

According to the sixth aspect of the invention, at the same time as a surface processing is performed on the base, it is possible to form the recess, and thus it is possible to reduce man-hours for processing and the processing cost.

### BRIEF DESCRIPTION OF THE DRAWINGS

FIG. 1 is a base configuration diagram of a brake fluid pressure control device for a vehicle capable of handling two systems according to the present invention.
FIG. 2A is a perspective view of the brake fluid pressure control device for a vehicle, and FIG. 2B is a partial sectional view.
FIGs. 3A and 3B are perspective views of the brake fluid pressure control device for a vehicle which includes a recess having a substantially triangular shape.
FIG. 4 is a perspective view of a banjo fitting.
FIG. 5 is a plan view for explaining the relation between banjo fittings and the recess.
FIGs. 6A to 6C are views for explaining a process of processing three faces of a base while forming the recess in the base.
FIGs. 7A to 7C are views for explaining a process of processing the other three faces of the base.

### DETAILED DESCRIPTION

Embodiments of the present invention will be described below on the basis of the accompanying drawings. By the way, the drawings should be viewed in the direction of reference symbols.

Also, a control device for controlling the fluid pressures of a front-wheel brake and a rear-wheel brake will be referred to as a brake fluid pressure control device for a vehicle capable of handling two systems, and a control device for controlling the fluid pressure of one of a front-wheel brake and a rear-wheel brake will be referred to as a brake fluid pressure control device for a vehicle capable of handling one system.

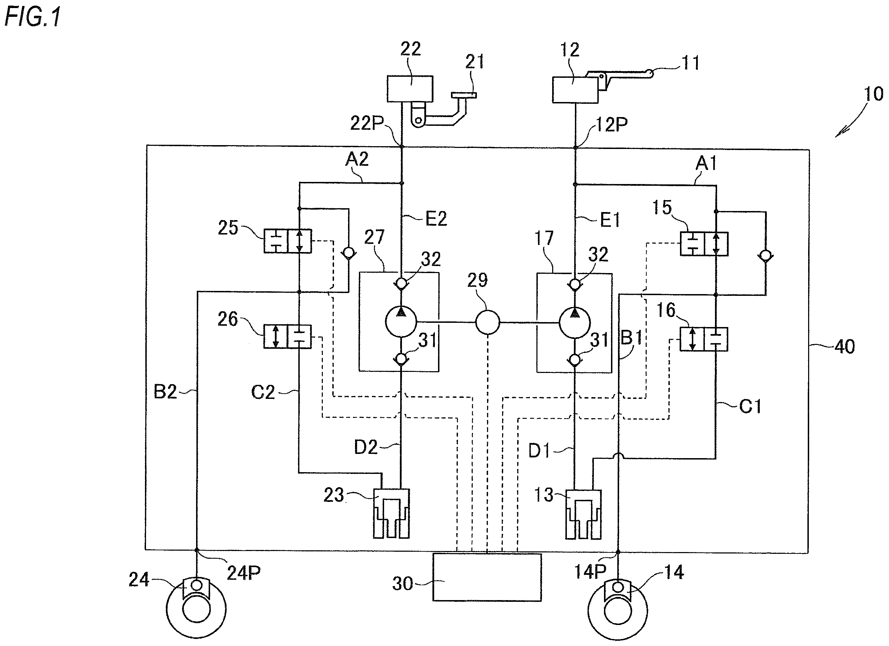

As shown in FIG. 1, a brake fluid pressure control device 10 for a vehicle capable of handling two systems includes: a first master cylinder 12 which pressurizes a hydraulic fluid in response to an operation on a brake lever, thereby producing a fluid pressure; a first reservoir 13 which temporarily stores the hydraulic fluid released from a front-wheel brake caliper 14; a first inlet control valve 15 and a first outlet control valve 16 which are assembling components that are installed between the first master cylinder 12 and the front-wheel brake caliper 14, the first inlet control valve 15 which is a normally open type electromagnetic valve, the first outlet control valve 16 which is a normally closed type electromagnetic valve; a first pump 17 which is an assembling component that is sucks the hydraulic fluid stored in the first reservoir 13 and returns the hydraulic fluid toward the first master cylinder 12; a second master cylinder 22 which pressurizes the hydraulic fluid in response to an operation on a brake pedal 21, thereby producing a fluid pressure; a second reservoir 23 which temporarily stores the hydraulic fluid released from a rear-wheel brake caliper 24; a second inlet control valve 25 and a second outlet control valve 26 which are assembling components installed between the second master cylinder 22 and the rear-wheel brake caliper 24, the second inlet control valve 25 which is a normally open type electromagnetic valve, the second outlet control valve 26 which is a normally closed type electromagnetic valve; a second pump 27 which is an assembling component that sucks the hydraulic fluid stored in the second reservoir 23 and returns the hydraulic fluid toward the second master cylinder 22; a motor 29 which drives the first and second pumps 17 and 27; a control device 30 which performs driving control on the motor 29 and opening and closing control on the first and second inlet control valves 15 and 25 and the first and second outlet control valves 16 and 26; and brake fluid passages A1, B1, C1, D1, and E1 of a first system and brake fluid passages A2, B2, C2, D2, and E2 of a second system which are provided in a base 40 and flow a brake fluid.

Here, the brake fluid passage A1 is a fluid passage extending from an inlet port 12P to the first inlet control valve 15, and the brake fluid passage B1 is a fluid pressure extending from the first inlet control valve 15 to an outlet port 14P. Also, the brake fluid passage C1 is a fluid passage extending from the brake fluid passage B1 to the first reservoir 13, and the brake fluid passage D1 is a fluid passage extending from the first reservoir 13 to the first pump 17. Further, the brake fluid passage E1 is a fluid passage extending from the first pump 17 to the brake fluid passage A1. With respect to the brake fluid passages A2, B2, C2, D2, and E2, since a description will be a duplicate, a description will not be made.

Suction valves 31 are installed on the suction sides of the first and second pumps 17 and 27, respectively, and discharge valves 32 are installed on the discharge sides of the first and second pumps 17 and 27, respectively.

Also, the base 40 includes the inlet port 12P to which a fluid passage (a brake line) extending from the first master cylinder 12 is connected, an inlet port 22P to which a fluid passage (a brake line) extending from the second master cylinder 22 is connected, the outlet port 14P to which a fluid passage (a brake line) extending to the front-wheel brake caliper 14 is connected, and an outlet port 24P to which a fluid passage (a brake line) extending to the rear-wheel brake caliper 24 is connected.

Now, the operation of the brake fluid pressure control device 10 for a vehicle will be described. However, since the first system from the brake pedal 21 to the front-wheel brake caliper 14 and the second system from the brake pedal 21 to the rear-wheel brake caliper 24 are the same in the operation, only the first system will be described.

### • State where ABS is not operated

When it is not required to lock a front wheel, the control device 30 stops the first pump 17, and opens the first inlet control valve 15, and closes the first outlet control valve 16. In this state, if the brake lever 11 is operated to the braking side, the fluid pressure is increased by the first master cylinder 12, and this fluid pressure is transmitted to the front-wheel brake caliper 14 via the first inlet control valve 15.

### • ABS (Depressurization Mode)

If it is nearly required to lock the front wheel, the control device 30 closes the first inlet control valve 15, and opens the first outlet control valve 16. The fluid pressure in the front-wheel brake caliper 14 is released to the first reservoir 13 via the first outlet control valve 16. By this, the brake fluid pressure of the front-wheel brake caliper 14 is decreased.

### • ABS (Hold Mode)

The control device 30 closes both of the first inlet control valve 15 and the first outlet control valve 16. By this, the brake fluid pressure of the front-wheel brake caliper 14 is held constantly.

### • ABS (Pressurization Mode)

When increasing the brake fluid pressure, the control device 30 opens the first inlet control valve 15, and closes the first outlet control valve 16. By this, the fluid pressure produced by the master cylinder 12 is transmitted to the front-wheel brake caliper 14. By this, the brake fluid pressure of the front-wheel brake caliper 14 is increased.

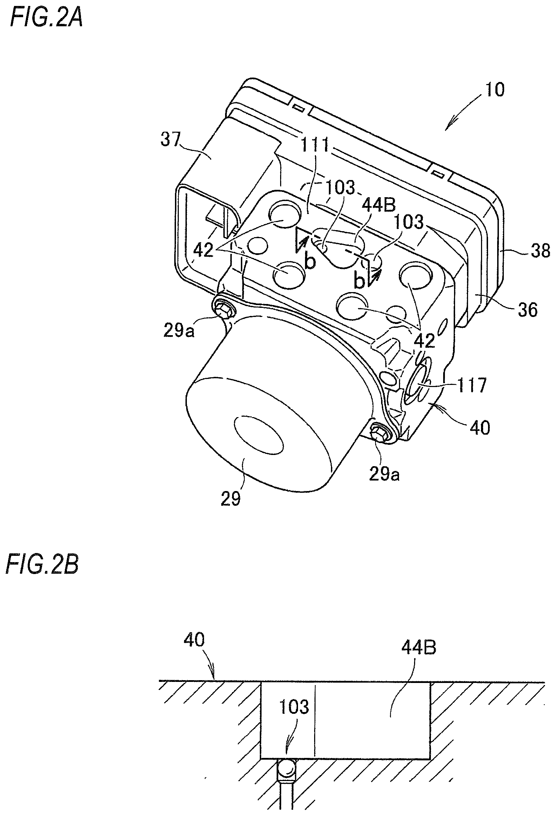

As shown in FIG. 2A, the brake fluid pressure control device 10 for a vehicle includes the base 40 having a block shape, a housing 36 mounted on the base 40, and the motor 29 mounted on the base 40. An opening of the housing 36 is covered with a cover 38.

In one face of the base 40, insertion holes 42 in which the brake lines are inserted are formed at parts corresponding to the inlet ports 12P and 22P and the outlet ports 14P and 24P described with FIG. 1, and a recess 44B having a substantially triangular shape is formed at a substantially central part.

Also, the motor 29 is fixed to the base 40 with a plurality of screws 29a, and the housing 36 integrally has a connector part 37 extending along the base 40.

FIG. 2B is a cross-sectional view taken along a line B-B of FIG. 2A.

As shown in FIG. 2B, the recess 44B which is formed in the base 40 is formed in a shape having a U-shaped cross section shape having flat inner circumferential surfaces. In the bottom of the recess 44B, a hole 103 is formed, and the hole 103 is sealed with a sealing member.

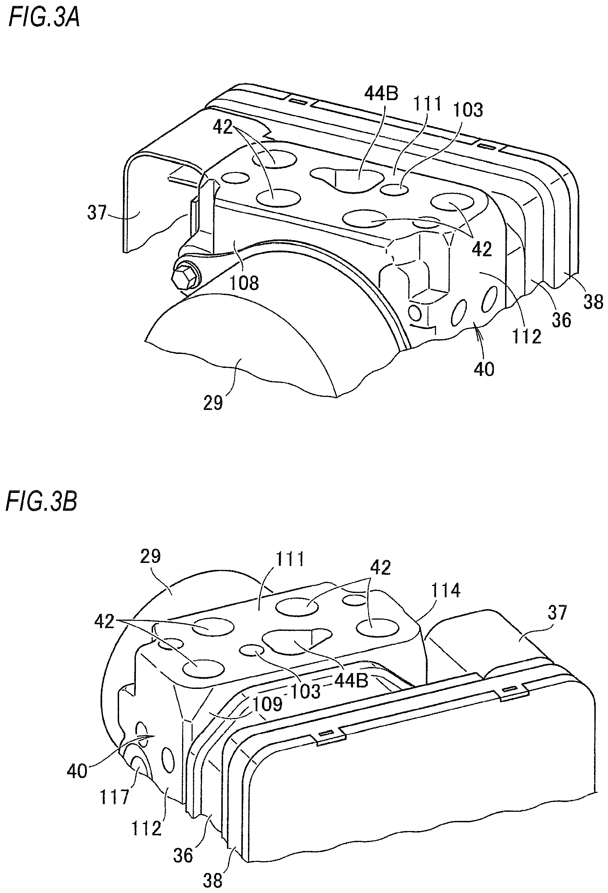

FIG. 3A is an enlarged view of a main part as seen from the motor 29 side, and FIG. 3B is an enlarged view of the main part as seen from the housing 36 side.

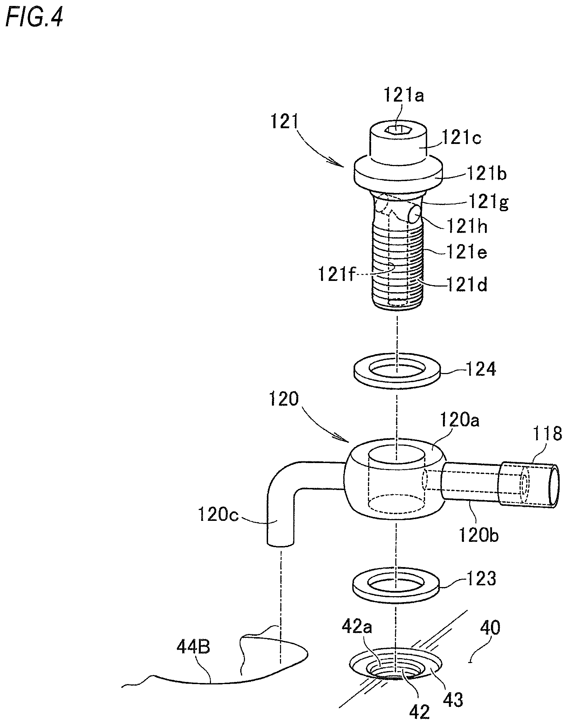

As shown in FIG. 3A, in a first face 111 of the base 40, the recess 44B having the substantially triangular shape is formed, and the insertion holes 42 for connecting the brake lines are formed. The brake lines are connected to the insertion holes 42 via banjo fittings (a reference symbol "120" in FIG. 4) which will be described below, however, the brake lines may be connected via pipe joints such as flare type fittings.

Next, the configuration of a banjo fitting 120 will be described.

As shown in FIG. 4, the banjo fitting 120 is attached to a leading end of a brake line 118. The banjo fitting 120 is composed of a cylindrical part 120a, a pipe part 120b which extends from the cylindrical part 120a and is inserted into the brake line 118, and a protruding part (a leading end part) 120c which extends from the cylindrical part 120a and has an L or J shape.

The banjo fitting 120 is used as a set with a banjo bolt 121 which passes through the cylindrical part 120a.

The banjo bolt 121 is composed of a head part 121c including a hexagonal hole 121a and a flange 121b, and a shaft part 121e extending from the head part 121c and including a male screw part 121d.

A shaft center hole 121f is formed in the shaft part 121e, and an annular groove 121g is formed in a part of the shaft part 121e close to the flange 121b (a part which does not interfere with the main body part 128). A through-hole 121h is formed from the annular groove 121g to the shaft center hole 121f.

In the base 40, an insertion hole 42 corresponding to the brake line 118 is formed. At an opening end of the insertion hole 42, a female screw part 42a is formed.

On the base 40, a washer 123 is mounted as a lower seal member, and on the washer 123, the cylindrical part 120a of the banjo bolt 121 is mounted, and on the cylindrical part 120a, a washer 124 is mounted as an upper seal member.

Next, the shaft part 121e of the banjo bolt 121 is inserted through the washer 124, the cylindrical part 120a, and the washer 123, and the male screw part 121d is screwed into the female screw part 42a. Since the washer 124 is pressed by the flange 121b, and the washer 123 is pressed by the cylindrical part 120a, they exert a sealing effect together.

The brake fluid supplied from the brake line 118 flows in the pipe part 120b of the banjo fitting 120, the annular groove 121g, the through-hole 121h, and the shaft center hole 121f of the banjo bolt 121 in this order, and reaches the brake fluid passage inside the base 40.

Since the annular groove 121g is formed, regardless of the orientation of the cylindrical part 120a, the flow of the brake fluid is ensured.

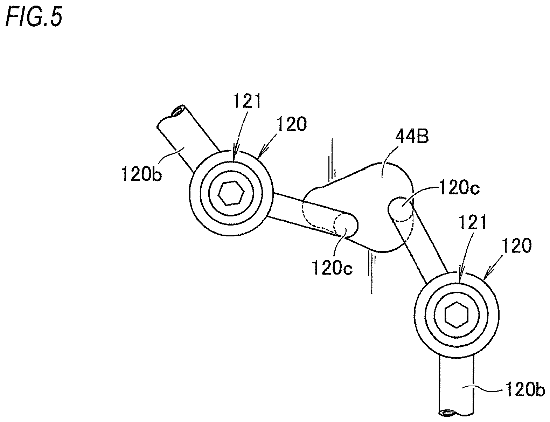

As shown in FIG. 5, the leading end parts 120c of the banjo fittings 120 are inserted into the recess 44B. Next, the banjo bolts 121 are turned in a predetermined direction. Then, the banjo fittings 120 are rotated with the banjo bolts 121. However, since the leading end parts 120c come into contact with the wall of the recess 44B, turning of the banjo fittings 120 is stopped.

It is possible to insert the leading end parts 120c of the plurality of banjo fittings 120 into the recess 44B and to stop turning.

Next, a method of processing the base 40 which is a main part of the brake fluid pressure control device for a vehicle.

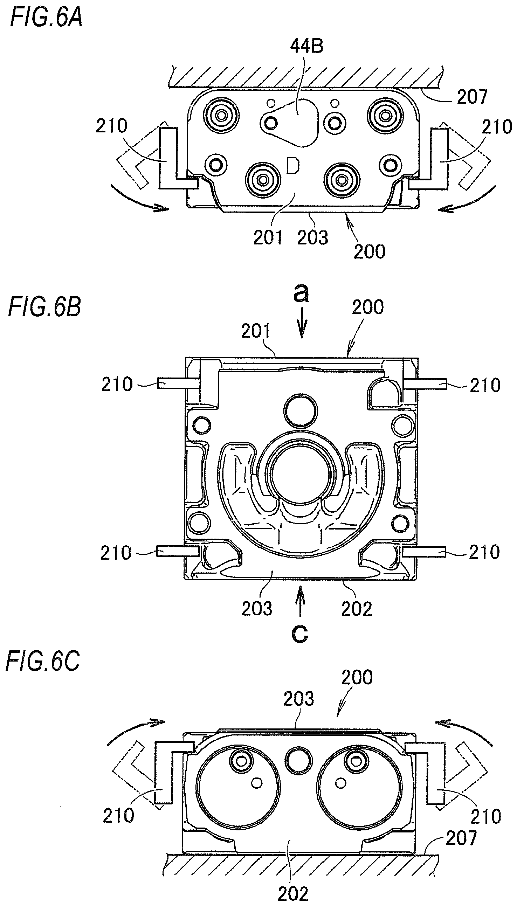

On the basis of FIGs. 6A to 6C, formation of the recess 44B on the base 40, and machining on three faces of the base 40 will be described.

FIG. 6B is a plan view, FIG. 6A is a view as seen in the direction of an arrow "a" of FIG. 6B, and FIG. 6C is a view as seen in the direction of an arrow "c" of FIG. 6B.

As shown in FIG. 6C, a material 200 is put on a surface plate 207 or the like. Then, the material 200 is clamped with clamp fittings 210. As shown in FIG. 6B, the material 200 is clamped with the clamp fittings 210. In this state, three faces (a first face 201, a second face 202, and a third face 203 of the material 200) where the clamp fittings 210 and a cutting tool do not interfere with each other are machined. At this time, in FIG. 6A, the recess 44B is formed.

When processing of the recess 44B and so on is ended, the clamp fittings 210 are loosened or removed, and the material 200 is horizontally rotated 90 degrees, and is turned upside down.

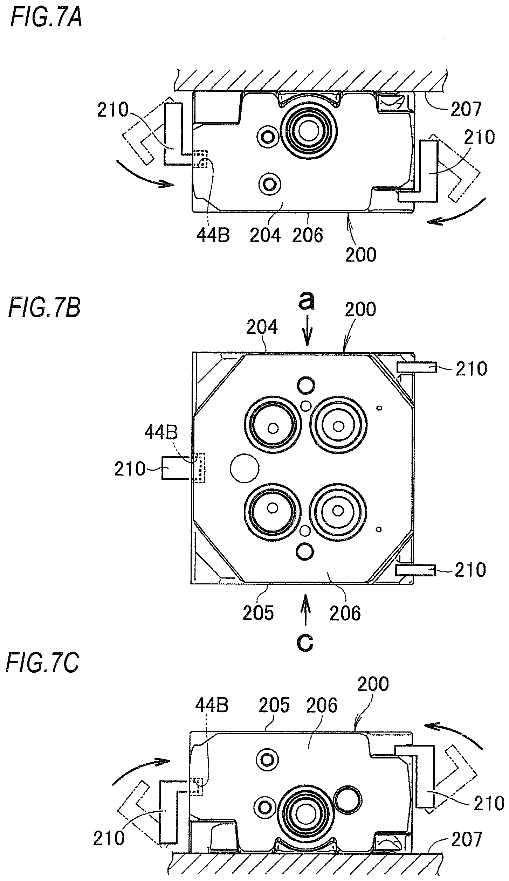

As shown in FIG. 7B, the position of the recess 44B has been changed. In FIG. 7C, the material 200 is clamped with the clamp fittings 210, and at this time, the recess 44B is used to clamp. The swingable type clamp fittings 210 are moved in the vertical direction for clamping. Since the recess 44B has a room in the height direction, it is possible to use of the swingable type clamp fittings 210.

After clamping, the other three faces (a fourth face 204, a fifth face 205, and a sixth face 206 of the material 200) where the clamp fittings 210 and the cutting tool do not interfere with each other are machined.

Thereafter, as shown in FIG. 5, the leading end parts 120c of the banjo fittings 120 are inserted into the recess 44B, whereby turning of the banjo fittings 120 is stopped.

In the present example, the recess 44B having the substantially triangular shape is shown, however, the shape of the recess is not limited thereto, and may be a shape other than the triangular shape.

Also, the method of processing the base 40 shown in FIGs. 6A to 6C and FIGs. 7A to 7C is one example, and as long as it is possible to use the recess 44B as a clamp hole, any other method may be used.

Also, in the example, the recess 44B is configured to double as a clamp hole, however, if a main object is to stop turning the brake lines 118, the recess may be used only to stop turning without doubling as a clamp hole.

In other words, in the base 40 of the brake fluid pressure control device 10 for a vehicle, which includes the brake fluid passages A1 to E1 and A2 to E2 formed therein, in one face, the insertion holes 42 for connecting the brake lines 118 are formed, and the common recess 40B for inserting the leading end parts 120c of the plurality of brake lines 118 is formed, such that turning of the plurality of brake lines 118 is stopped by the recess 40B, whereby it is possible to minimize man-hours for processing to stop turning of the plurality of brake lines 118.

Although the shape of the recess 44B is arbitrary, if the recess is formed in the substantially triangular shape, it becomes easier to insert and pull out the leading end parts 120c and 120c as compared to an elongated hole shape.

Also, although the formation position of the recess 40B is arbitrary, if the recess is formed at a position surrounded by the plurality of insertion holes 42 like the example, it is possible to dispose the recess 40B with good balance with respect to the insertion holes 42.

Also, although whether to dispose the hole 103 in the bottom of the recess 44B is arbitrary, as described with FIG. 3B, in the case of forming the hole 103 in the bottom of the recess 44B, since the hole 103 can be formed from the bottom of the recess 44B, it is possible to reduce the time required to form the hole 103.

Until now, the brake fluid pressure control device 10 for a vehicle capable of handling two systems for controlling the front-wheel brake caliper (the reference symbol "14" in FIG. 1) and the rear-wheel brake caliper (the reference symbol "24" in FIG. 1) has been described. However, the present invention can also be applied to a brake fluid pressure control device for a vehicle capable of handling one system.

Further, the present invention is suitable for a motorcycle, however, it can also be applied to a tricycle, and can be applied to a general vehicle as well.

## Claims

1. A brake fluid pressure control device (10) for a vehicle, which includes a base (40) including a brake fluid passage (A1-E1, A2-E2) formed therein,
wherein in one face of the base (40), a plurality of insertion holes (42) in which a plurality of brake lines (118) are to be inserted are formed, and a recess (44B) for stopping turning of the plurality of brake lines (118) is formed,
**characterized in that**
protruding parts (120c) of the plurality of brake lines (118) are inserted into the recess (44B).

2. The brake fluid pressure control device (10) according to claim 1, wherein an opening of the recess (44B) is formed in a substantially triangular shape.

3. The brake fluid pressure control device (10) according to claim 1 or 2, wherein the recess (44B) is formed at a position surrounded by the plurality of insertion holes (42).

4. The brake fluid pressure control device (10) according to any one of claims 1 to 3, wherein in the one face of the base (40), a hole (103) is formed to be connected to the brake fluid passage (A1-E1, A2-E2), and the hole (103) is formed so as to be included in the recess (44B).

5. The brake fluid pressure control device (10) according to any one of claims 1 to 4, wherein the recess (44B) is formed in a shape having a U-shaped cross section having flat inner circumferential surfaces.

6. A method of manufacturing a brake fluid pressure control device (10) for a vehicle, which includes a base (40) including a brake fluid passage (A1-E1, A2-E2) formed therein, the method comprising:
a step of forming a recess (44B) in one face of a base (40); and
a step of processing the base (40) while clamping the base (40) using the recess (44B);
**characterized by**
a step of inserting protruding parts (120c) of a plurality of brake lines (118) into the recess (44B).

## Patentansprüche

1. Bremsflüssigkeitsdrucksteuerungsvorrichtung (10) für ein Fahrzeug, das eine Basis (40) aufweist, die einen Bremsflüssigkeitskanal (A1-E1, A2-E2) darin ausgebildet einschließt,
wobei in einer Fläche der Basis (40) eine Vielzahl von Einführungslöchern (42), in die eine Vielzahl von Bremsleitungen (118) eingeführt werden sollen, gebildet sind, und eine Ausnehmung (44B) zum Stoppen einer Drehung der Vielzahl von Bremsleitungen (118) gebildet ist,
**dadurch gekennzeichnet, dass**
vorstehende Teile (120c) der Vielzahl von Bremsleitungen (118) in die Ausnehmung (44B) eingeführt sind.

2. Bremsflüssigkeitsdrucksteuerungsvorrichtung (10) nach Anspruch 1, wobei eine Öffnung der Ausnehmung (44B) in einer im Wesentlichen dreieckigen Form gebildet ist.

3. Bremsflüssigkeitsdrucksteuerungsvorrichtung (10) nach Anspruch 1 oder 2, wobei die Ausnehmung (44B) an einer Position gebildet ist, die von der Vielzahl von Einführungslöchern (42) umgeben ist.

4. Bremsflüssigkeitsdrucksteuerungsvorrichtung (10) nach einem der Ansprüche 1 bis 3, wobei in der einen Fläche der Basis (40) ein Loch (103) gebildet ist, um mit dem Bremsflüssigkeitskanal (A1-E1, A2-E2) verbunden zu werden, und das Loch (103) gebildet ist, um in der Ausnehmung (44B) aufgenommen zu sein.

5. Bremsflüssigkeitsdrucksteuerungsvorrichtung (10) nach einem der Ansprüche 1 bis 4, wobei die Ausnehmung (44B) in einer Form, einen U-förmigen Querschnitt aufweisend, flache Innenumfangsflächen aufweisend, gebildet ist.

6. Verfahren zur Herstellung einer Bremsflüssigkeitsdrucksteuerungsvorrichtung (10) für ein Fahrzeug, das eine Basis (40) einschließt, die einen Bremsflüssigkeitskanal (A1-E1, A2-E2) darin gebildet einschließt, wobei das Verfahren umfasst:
einen Schritt eines Bildens einer Ausnehmung (44B) in einer Fläche einer Basis (40); und
einen Schritt eines Bearbeitens der Basis (40), während die Basis (40) unter Verwendung der Ausnehmung (44B) geklemmt wird;
**gekennzeichnet durch**
einen Schritt eines Einführens vorstehender Teile (120c) einer Vielzahl von Bremsleitungen (118) in die Ausnehmung (44B).

## Revendications

1. Dispositif de commande de pression de fluide de frein (10) pour un véhicule, qui comporte une base (40) comportant un passage de fluide de frein (A1-E1, A2-E2) formé à l'intérieur,
dans lequel dans une face de la base (40), une pluralité de trous d'insertion (42) dans lesquels une pluralité de conduites de frein (118) doivent être insérées sont formés, et un évidement (44B) pour arrêter la rotation de la pluralité de conduites de frein (118) est formé,
**caractérisé en ce que**
des parties en saillie (120c) de la pluralité de conduites de frein (118) sont insérées dans l'évidement (44B).

2. Dispositif de commande de pression de fluide de frein (10) selon la revendication 1, dans lequel une ouverture de l'évidement (44B) est formée en une forme sensiblement triangulaire.

3. Dispositif de commande de pression de fluide de frein (10) selon la revendication 1 ou 2, dans lequel l'évidement (44B) est formé à une position entourée par la pluralité de trous d'insertion (42).

4. Dispositif de commande de pression de fluide de frein (10) selon l'une quelconque des revendications 1 à 3, dans lequel dans la face en question de la base (40), est formé un trou (103) devant être relié au passage de fluide de frein (A1-E1, A2-E2), et le trou (103) est formé de sorte à être inclus dans l'évidement (44B).

5. Dispositif de commande de pression de fluide de frein (10) selon l'une quelconque des revendications 1 à 4, dans lequel l'évidement (44B) est formé en une forme ayant une section transversale en U ayant des surfaces circonférentielles internes plates.

6. Procédé de fabrication d'un dispositif de commande de pression de fluide de frein (10) pour un véhicule, qui comporte une base (40) comportant un passage de fluide de frein (A1-E1, A2-E2) formé à l'intérieur, le procédé comprenant :
une étape de formation d'un évidement (44B) dans une face d'une base (40) ; et
une étape de traitement de la base (40) tout en serrant la base (40) au moyen de l'évidement (44B) ;
**caractérisé par**
une étape d'insertion de parties en saillie (120c) d'une pluralité de conduites de frein (118) dans l'évidement (44B).
